# EUROPEAN PATENT APPLICATION

(11) **EP 4 748 522 A1**
(43) Date of publication of application: **27.05.2026**
(21) Application number: 25214858.0
(22) Date of filing: 11.11.2025
(51) Int. Cl.: B23B 29/02, B23B 45/00

(54) **PORTABLE BORING MACHINE**

(30) Priority: 22.11.2024 IT 202400026328
(71) Applicant: SIR MECCANICA S.p.A., 88100 Catanzaro (IT)
(72) Inventor: SIRACUSA, Stefano, 88100 CATANZARO (CZ) (IT); SIRACUSA, Rinaldo Maria, 88100 CATANZARO (CZ) (IT)
(74) Representative: Casadei, Giovanni

(57) **Abstract**

A portable boring machine, comprising:
a machine body (2);
a rotation assembly, provided with a coupling ring (31) rotating about the rotation axis (X) and configured to allow an integral coupling in rotation about the rotation axis (X) with a tool-bearing shaft (S);
an advancement assembly, provided with a carriage (41) movable parallel to the rotation axis (X), which comprises fixing means (42) for fixing to the tool-bearing shaft (S), structured so as to enable the rotation of the shaft (S) about the rotation axis (X) and to be constrained to the shaft (S) relative to the translation along the rotation axis (X).
a machine coupling assembly (5) provided with a radial locking system with a removable body, to allow the machine to be fixed to the support (A) by means of a radial insertion in addition to the traditional axial insertion.
The carriage (41), the coupling ring (31) and the insertion part (5) project outside the machine body (2) transversely to the rotation axis (X).

## Description

The present invention relates to a portable boring machine.

As known, boring is a mechanical machining by chip removal that substantially consists of removing material from the surface of a hole, in order to restore the surface finish thereof. For the original diameter of the hole to be maintained, a material overlay is carried out by welding. The overlaid material is then machined by boring until a hole is obtained whose diameter corresponds to the original diameter.

The machining is carried out by means of a cutting tool, supported by a shaft that rotates and translates along its rotation axis, while the part to be machined remains stationary.

Portable boring machines are currently available, essentially designed to meet the need to carry out on-site works on machines or components that are immovable or difficult to transport. The portable boring machines allow the axial symmetrical surface of a hole to be restored to pre-established conditions, alternating boring and welding overlay operations, placing the machine directly on the component.

In a nutshell, the machining is carried out by fixing the boring machine on the component to be machined, using a modular and customisable support. Subsequently, the tool-bearing shaft is driven in rotation and axial translation, so that the cutting tool removes the material by combining the two rotary and translational movements.

The portable boring machines currently available comprise a machine body provided with a rotation assembly and an advancement assembly. The rotation assembly comprises a motor installed on a reducer which, in turn, transmits the rotary motion to the tool-bearing shaft on which the tool-bearing extensions and the cutting tools are installed. The reducer comprises a coupling ring designed to receive the tool-bearing shaft with prismatic coupling, so as to transmit the torque produced by the motor to the latter.

The advancement assembly comprises a second motor installed on a second reducer which, through a toothed belt, transmits the motion to a threaded bar and nut bushing system. The translational motion of the nut is exploited to axially move the tool-bearing shaft, once the latter is fixed, by means of a gripping device, to the end part of the machine body.

In the portable boring machines currently available, the coupling ring is arranged inside the machine body. The advancement assembly is also contained inside the machine body, except for the gripping device that projects from the machine body concentrically to the rotation axis of the coupling ring. As a result, the gripping device performs a stroke, necessary for the axial translation of the tool-bearing shaft, which extends beyond the encumbrance of the machine body along the rotation axis of the coupling ring.

The current portable boring machines therefore require an installation space which, measured along the rotation axis of the tool-bearing shaft, must be greater than the length of the machine body, again measured along the rotation axis of the tool-bearing shaft. In addition, the tool-bearing shaft must be provided with a length greater than the length of the machine body added to the expected stroke. In many cases, therefore, the use of the current boring machines is rather uncomfortable, if not impossible. For example, in the case of machining on holes made in close plates, or in all cases where there is not enough space available to accommodate the machine body of the boring machine and allow the installation and stroke of the tool-bearing shaft, it is not possible to use a portable boring machine, or it is necessary to move the part to be machined to a place that offers the necessary space.

Aim of the present invention is to offer a portable boring machine that allows to overcome the drawbacks of currently available portable boring machines.

The main advantage of the boring machine according to the present invention is to allow its installation in complex working situations where the axial encumbrances of the machine, to date, make installation impossible. Another advantage of the boring machine according to the present invention is to facilitate, in all cases of use, the installation of the machine, especially in the case of machining with small spaces available and/or reduced encumbrances all around.

In addition, the boring machine according to the present invention allows to significantly reduce the frequency of maintenance interventions, especially related to the lubrication of the threaded bar and nut bushing coupling, making this operation periodic and recommended only after many hours of use.

Additional features and advantages of the present invention will become more apparent from the detailed description that follows of one embodiment of the invention in question, illustrated by way of non-limiting example in the appended figures, in which:

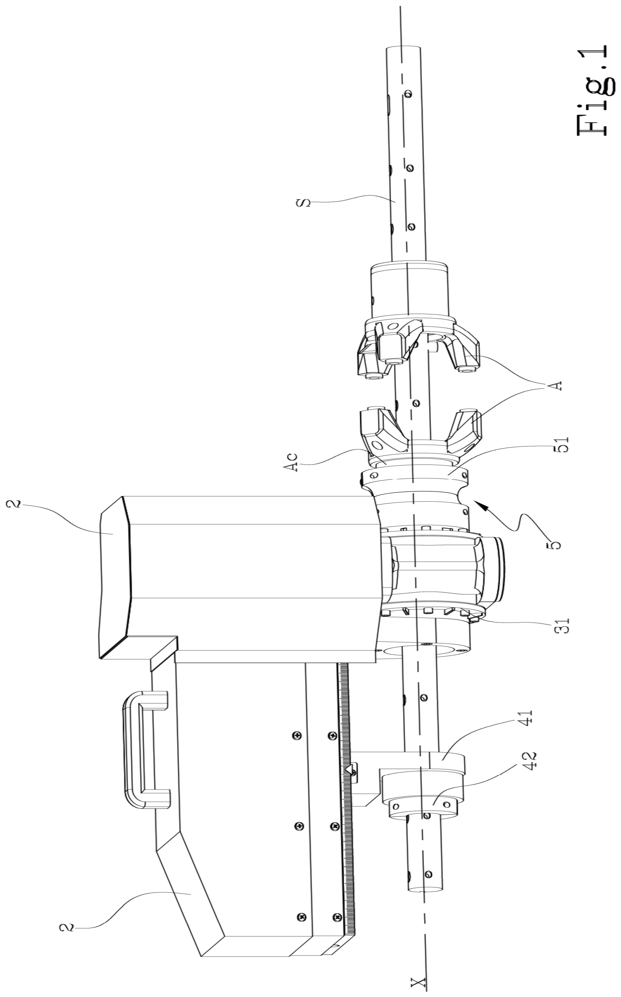

- figure 1 shows an isometric view of the portable boring machine according to the present invention;

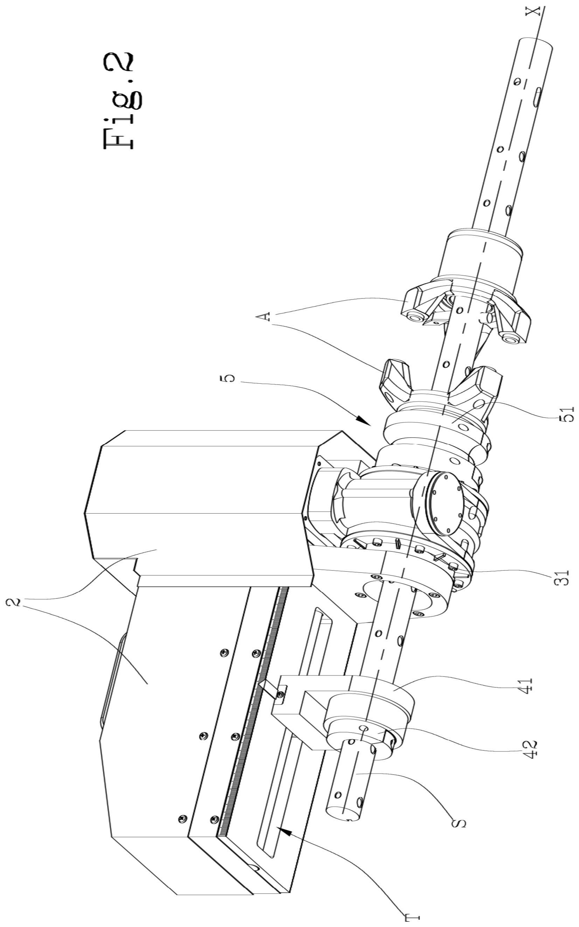

- figure 2 shows a second isometric view of the boring machine according to the present invention;

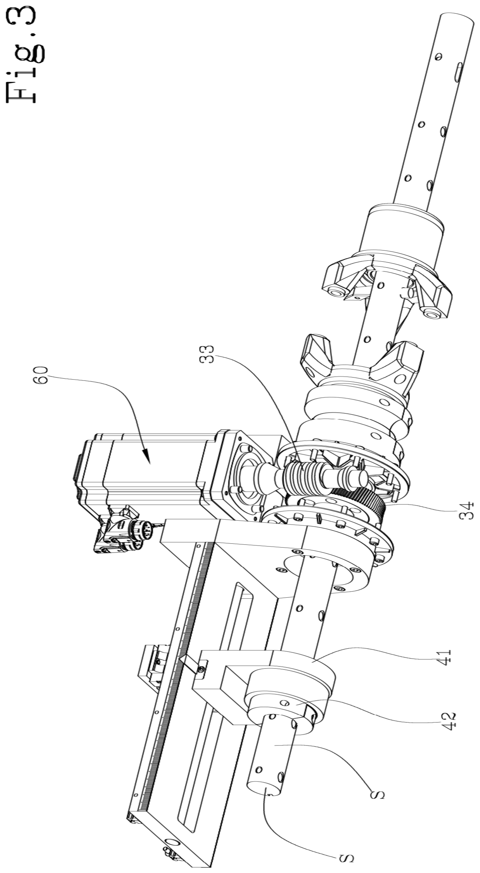

- figures 3 and 4 show two further isometric views of the boring machine according to the present invention, with some parts of a machine body (2) removed to highlight internal parts of the boring machine;

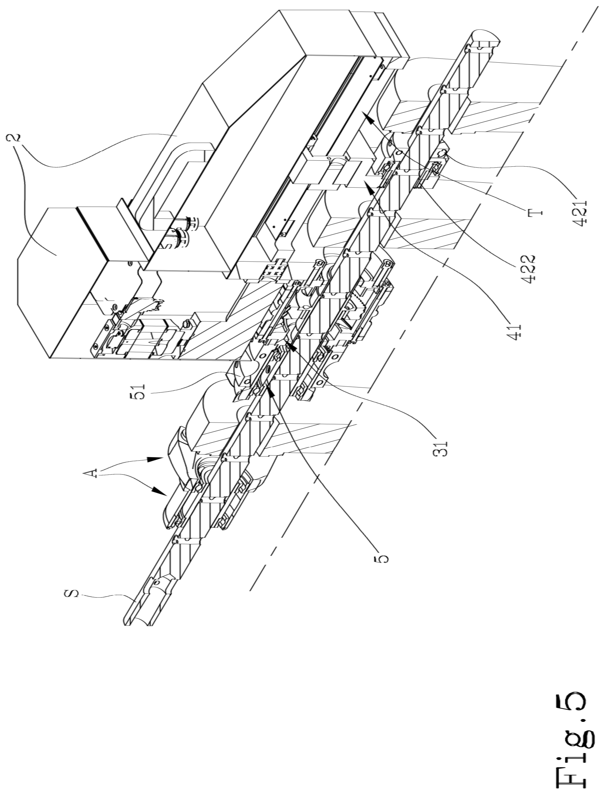

- figure 5 shows a perspective view of the boring machine according to the present invention;
- figure 6 shows the boring machine according to the present invention, installed on a part to be machined;
- figure 7 shows an example of use of the boring machine according to the present invention;
- figure 8 shows a comparison between the boring machine according to the present invention (on the left) and a boring machine of known type (on the right).

The portable boring machine according to the present invention comprises a machine body (2). The machine body (2) comprises a casing, inside which most of the components of the boring machine are contained. Some elements intended to interact with a tool-bearing shaft (S) remain external to the machine body (2), as will be better explained below. In a possible embodiment, the tool-bearing shaft (S) is configured to support a cutting tool, for performing machining by chip removal on the surface of a hole. In another possible embodiment, the tool-bearing shaft (S) is configured to support a welding torch, for performing the refill of a weld on the surface of a hole. A complete working cycle for a hole typically involves refilling a welding layer on the surface of the hole, with a thickness that determines a diameter of the hole smaller than that to be obtained, and the subsequent machining of the surface of the hole, with the removal of a thickness of material depending on the diameter to be obtained.

The boring machine further comprises a rotation assembly, provided with a coupling ring (31) rotating about a rotation axis (X), which is configured to allow an integral coupling with a tool-bearing shaft (S) in rotation about the rotation axis (X). The ring (31) has a substantially annular conformation, and delimits a circular seat inside which the tool-bearing shaft (S) can be inserted. The coupling between the ring (31) and the tool-bearing shaft (S), integral with the rotation about the rotation axis (X), is made for example by means of a key and a groove obtained on the tool-bearing shaft (S), in a manner known in the sector.

The boring machine also comprises an advancement assembly, provided with a carriage (41) movable along a parallel direction and coplanar with the rotation axis (X). The carriage (41) is provided with a fixing means (42) for fixing to the tool-bearing shaft (S), which is structured so as to enable the rotation of the shaft (S) about the rotation axis (X) and to be constrained to the shaft (S) relative to the translation along the rotation axis (X). Moving along the rotation axis (X), the carriage (41) integrally moves the tool-bearing shaft (S) along the rotation axis (X).

The boring machine according to the invention further comprises an attachment or insertion device (5), configured to allow the machine body (2) to be attached to an operating support (A), integral with the part to be machined, either by means of an axial insertion movement, as occurs in traditional boring machines, or advantageously by means of a direct insertion movement radially relative to the rotation axis (X), not envisaged and not possible in traditional boring machines.

The operating support (A), known in the sector, substantially comprises at least one attachment body, intended to be rigidly fixed to the part to be machined, to define a coupling and support for the machine body (2), as well as a centring for the tool-bearing shaft (S). The support (A) is fixed to the part to be machined in a manner known in the art. In the embodiment shown, the operating support (A) can be used individually, in pairs, or in combination of several components depending on the working conditions. The support (A) is provided with three support areas for the part to be machined and comprises a cylindrical portion (Ac), concentric to the rotation axis (X) of the tool-bearing shaft (S).

The advancement assembly according to the present invention, comprising the carriage (41) and the fixing means (42), offers a considerable advantage over currently available solutions. In fact, while in the currently available solutions it is necessary to install two or more supports for the tool-bearing shaft, in the solution according to the present invention it is sufficient to use only the operating support (A), on which the machine body (2) is installed. The operating support (A) and the carriage (41) constrain the tool-bearing shaft (S) in two points, making machining possible, without the need to use other support points and consequently reducing the necessary axial spaces to a minimum.

The carriage (41) is able to support the tool-bearing shaft (S) even in the case of machining in areas close to the carriage (41) itself. This allows the machine body (2) to be installed with considerable freedom of positioning, so that machining is possible both in the front part close to the operating support (A), and in the rear part close to the carriage (41), without the need to install further supports and even in the presence of reduced axial spaces in which it is not possible to install further supports for the tool-bearing shafts. On the contrary, in current solutions, the carriage is limited only to the function of clamping and driving the tool-bearing shaft, but, due to the very structure of the machines, it does not offer a stable support for machining, making it necessary to use additional supports.

The attachment or insertion device (5) comprises a fixed body (51), integral with the machine body (2), and a clamping body (52), removable from the fixed body (51) and clampable to the latter to solidly constrain the operating support (A). The possibility of removing the clamping body (52) allows the fixed body (51) to be brought into contact with the operating support (A) with a movement in a radial direction relative to the rotation axis (X) and, subsequently, to clamp the clamping body (52) so as to lock the operating support (A).

In the preferred but not exclusive embodiment shown, the attachment or insertion device (5) comprises a fixed body (51), integral with the machine body (2) and provided with a shaped seat, intended to receive a portion of an operating support (A). In the preferred but not exclusive embodiment shown, said shaped seat is semi-cylindrical and is shaped to receive the cylindrical portion (Ac) of the operating support (A). The attachment or insertion device (5) further comprises a clamping body (52), provided with a shaped seat complementary to the shaped seat of the fixed body (51). The clamping body (52) is removable from the fixed body (51), so as to make the shaped seat of the fixed body (51) accessible through a radial direction relative to the rotation axis (X). The clamping body (52) is arranged to be clamped to the fixed body (51), in order to enable the clamping of said portion of an operating support (A) between the two shaped seats. Once the clamping body (52) is clamped, the machine body (2) is made integral with the operating support (A). In the preferred but not exclusive embodiment shown, the shaped seat of the clamping body (52) is semi-cylindrical.

The conformation of the attachment or insertion device (5) comprising a fixed body (51) and a clamping body (52) removable from the fixed body (51), allows the operating support (A) to be inserted both by a direct axial movement along the rotation axis (X), as in current portable boring machines, and by a radial movement relative to the rotation axis (X). This radial movement, which is not possible in current portable boring machines, further reduces the useful space required for installation.

In fact, the machine body (2) can be positioned on the main support (A) after removing the clamping body (52). Subsequently, by means of a movement in a direction orthogonal to the machining axis (radial movement), the fixed body (51) is brought into contact with the main support (A). This manoeuvre clearly differentiates the machine in question from the systems currently available which, involving an axial insertion of the machine body on the main support, require greater axial space for installation. Finally, the clamping body (52) is fixed to the fixed body (51), thus anchoring the machine body (2) to the component to be machined. It is therefore possible to insert the machine body (2) into the work area, even when the latter has limited axial encumbrances. In addition, the attachment or insertion device (5) structure allows to improve the installation concentricity errors of the systems on the market, which adopt an axial insertion anchorage with elastic action locking.

A further advantage of the solution according to the present invention is that it permits to use a tool-bearing shaft of considerably reduced length since, in addition to the support provided by the main support (A), the carriage of the machine (41) that is located within the encumbrance of the machine body itself and close to the surface to be machined is also used as an additional support point. Compared to the current solutions, the result obtained is that the shaft is correctly supported at two points close to each other and close to the machining area, further reducing the space required for the installation of the machine.

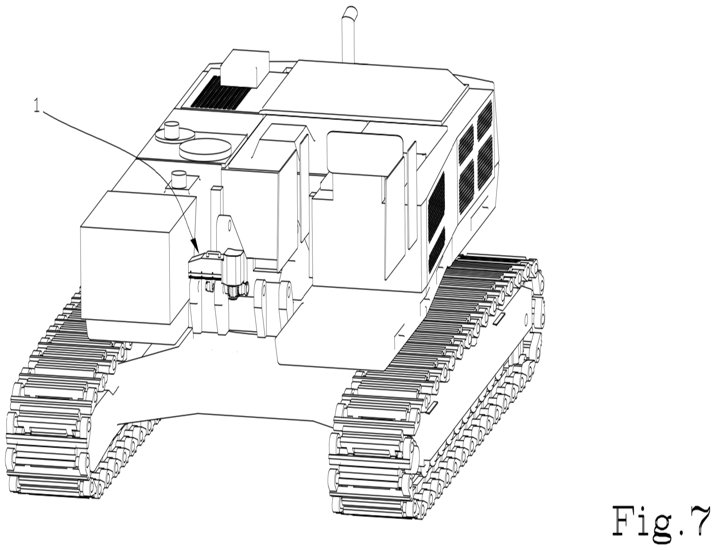

In this sense, figure 7 illustrates an example of use of the boring machine (1) according to the present invention, in a case where the installation space is rather reduced due to the presence of surrounding parts of an operating machine. Thanks to the possibility of being inserted on the attachment or insertion device (5) through a radial movement relative to the rotation axis (X), the boring machine (1) can be inserted in a small space to allow machining two coupling holes of the operator arm that would not be machinable with a boring machine of known type. Furthermore, thanks to the fact that the advancement carriage (41) and the coupling ring (31) project outside the machine body (2) transversely to the rotation axis (X), the portable boring machine according to the present invention is able to effectively perform the intended machining even in a confined space such as that shown in figure 7. In fact, both the coupling ring (31) and the carriage (41) remain within the longitudinal encumbrance of the machine body (2), and the carriage (41) is able to perform its own stroke while remaining within the longitudinal encumbrance of the machine body (2).

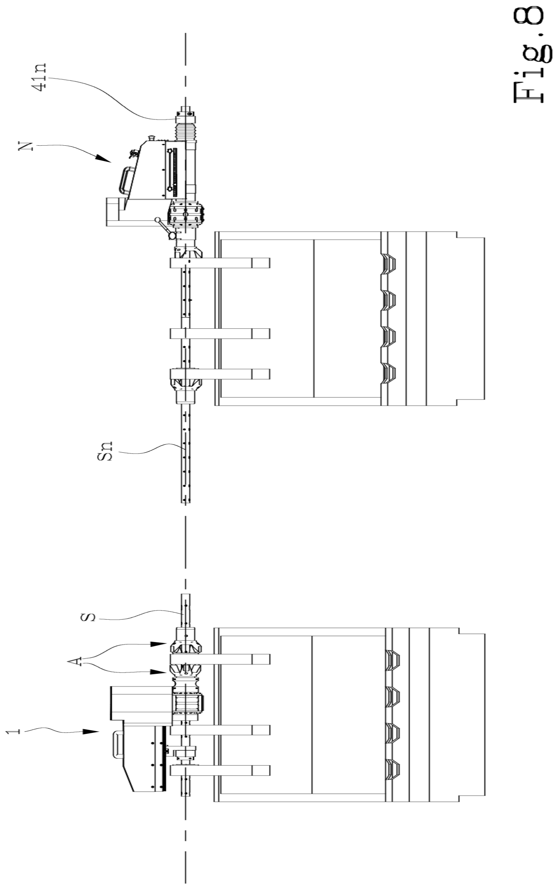

Figure 8 shows a comparison between a portable boring machine (1) according to the present invention and a portable boring machine (N) of known type. Also in this case, thanks to the possibility of being inserted on the attachment or insertion device (5) through a radial movement relative to the rotation axis (X), it can be immediately noted that the portable boring machine (1) according to the present invention requires a considerably smaller installation space compared to a portable boring machine (N) of known type. In fact, considering a longitudinal encumbrance measured along the rotation axis (X), the former remains substantially inside the encumbrance of the part to be machined, while the latter must be installed outside the encumbrance of the part to be machined, since it requires a direct insertion movement along the rotation axis (X). The length of the tool-bearing shaft (S) is also much shorter than the length of the tool-bearing shaft (Sn) of the portable boring machine (N) of known type. In addition to the greater longitudinal encumbrance due to the different structure, the portable boring machine (N) of known type requires additional longitudinal space to allow the necessary stroke along the rotation axis (X) of the advancement carriage (41n). On the contrary, in the portable boring machine according to the present invention, thanks to the fact that the advancement carriage (41) and the coupling ring (31) project outside the machine body (2) transversely to the rotation axis (X), it is possible to effectively perform the intended machining in a much smaller space, since the carriage (41) is able to perform its stroke while remaining within the longitudinal encumbrance of the machine body (2).

The coupling or insertion device (5) defines a rigid coupling relative to the operating support (A), instead of the elastic installation system in use in current portable boring machines. In this way, in addition to the installation advantages already mentioned, the installation of the machine body on the support (A) is made more precise, making the latter perfectly coaxial with the rotation axis (X) and greatly reducing any possible misalignment.

In the preferred but not exclusive embodiment shown, the carriage (41), the coupling ring (31) and the insertion part (5) project outside the machine body (2) transversely to the rotation axis (X). In other words, the carriage (41), the coupling ring (31) and the insertion part (5) are placed next to the machine body (2), on the same side, so that the tool-bearing shaft (S), when engaged with the carriage (41) and the ring (31), is also arranged next to the machine body (2). The rotation axis (X) of the coupling ring (31) and of the tool-bearing shaft (S) therefore does not pass through the machine body (2), but is arranged outside the machine body (2), next to the latter. On the contrary, in the portable boring machines currently available, the rotation axis of the tool-bearing shaft, and the tool-bearing shaft itself, pass through the machine body (2).

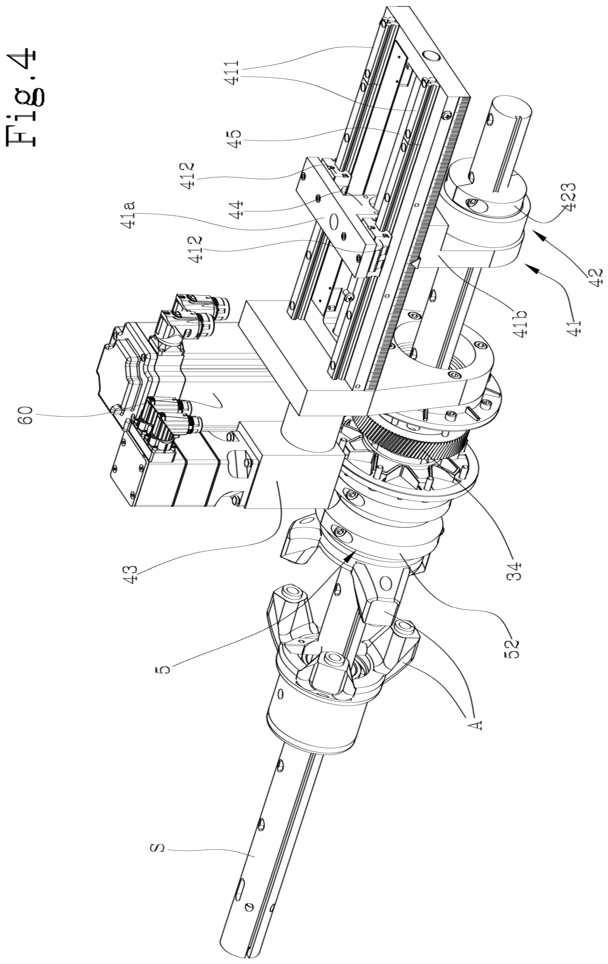

The portable boring machine according to the present invention, thanks to the characteristics summarized above, offers very important advantages. First of all, thanks to the fact that the carriage (41) and the coupling ring (31) project outside the machine body (2) transversely to the rotation axis (X), and with extremely small encumbrances, and thanks to the characteristics of the insertion part (5), provided with a fixed body (51) and a clamping element (52) removable from the fixed body (51), it is possible to install the portable boring machine on a radial plane and along a radial direction relative to the rotation axis (X), as shown in figure 4.

All this allows the machine body (2) to be installed alongside the part to be machined, substantially parallel to the rotation axis (X) of the tool-bearing shaft (S), drastically reducing the installation space along the rotation axis (X). In particular, in the example shown the machine body (2) remains within the width, measured along the rotation axis (X), of a digger shovel (P). By mounting the cutting tool in an appropriate position on the tool-bearing shaft (S), it is possible to machine any of the holes obtained on the plates (S1,S2,S3) of the blade (P), keeping the machine body (2) substantially in the position shown. In addition, the tool-bearing shaft (S) requires a much shorter length than the known portable boring machines, as it remains outside and next to the machine body (2). In the current boring machines, on the other hand, the length of the tool-bearing shaft, in addition to the section necessary for the machining stroke, must be increased by a section equal to the length of the machine body along the rotation axis (X). The advantages described above apply both in the case of machining by chip removal and in the case of the application of a welding layer: in the first case, the tool-bearing shaft (S) is provided with a special cutting tool; in the second case, the tool-bearing shaft (S) is provided with a welding torch. In a typical machining cycle for a hole, thanks to the characteristics described above, it is possible to quickly install the portable boring machine, insert the tool-bearing shaft (S) provided with a welding torch, carry out the refill of a welding layer, then remove the tool-bearing shaft (S) and insert a tool-bearing shaft provided with a cutting tool, to perform machining for chip removal.

In the preferred but not exclusive embodiment shown, the advancement assembly comprises a first motor (43). Preferably, the first motor (43) is a rotating electric motor.

A transmission system (44,45) is arranged so as to transmit the rotation produced by the first motor (43) to the carriage (41). In the preferred but not exclusive embodiment shown, the transmission system (44,45) comprises a nut (44), integral with the carriage (41), and a drive screw (45), kinematically connected to the motor (43). The drive screw (45) is arranged parallel to the rotation axis (X), inside the machine body (2). The carriage (41) is movable along a guide (411), comprising a pair of tracks (411) arranged parallel to the rotation axis (X) and positioned inside the machine body (2). To this end, the carriage (41) is provided with a pair of sliding blocks (412), sliding on said tracks (411). The carriage (41) substantially comprises a support portion (41a), to which the sliding blocks (412) are associated, which is arranged inside the machine body (2), and a projecting portion (41b), to which the fixing means (42) for the tool-bearing shaft (S) is associated. The support portion (41a) is partially arranged in a groove (T) passing through the machine body (2), and is connected to the projecting portion (41b), so that the latter is arranged outside the machine body (2).

The structure of the carriage (41) therefore allows the fixing means (42) to be kept outside the machine body (2), next to the latter. The configuration of the transmission system (44,45), together with the use of the guide (411), allows the projecting portion (41b) of the carriage (41) to be kept outside the machine body (2), while the other movable elements of the transmission are protected inside the machine body (2).

The fixing means (42), preferred but not exclusive, comprises a first ring (421) and a second ring (422), concentric to the rotation axis (X). The second ring (422) is arranged within the first ring (421). Between the first and the second ring there are interposed rolling means, for example a ball bearing, which allow the second ring (422) to rotate relative to the first ring (41). The first ring (421) is provided with a clamp (423) that is clampable on the second ring (422) in a radial direction. The clamping of the clamp (423) radially tightens the second ring (422) which is constrained to the tool-bearing shaft (S) relative to the translation along the rotation axis (X), allowing it to rotate in any case. In a possible embodiment, not illustrated, the advancement assembly comprises a linear motor, movable along a direction parallel to the rotation axis (X) and connected to the carriage (41), for translating the carriage (41) parallel to the rotation axis (X). In the preferred but not exclusive embodiment shown, the rotation assembly comprises a second motor (60). Preferably, the second motor (60) is a rotating electric motor. A transmission system (33,34) is arranged so as to transmit the rotation produced by the second motor (60) to the coupling ring (31). Preferably, the transmission system (33,34) comprises an endless screw (33), connected to the second motor (60), and a gearwheel (34), integral with the coupling ring (31) in rotation and meshed with the endless screw (33).

Preferably, but not necessarily, the second motor (60) is arranged with a rotation axis substantially perpendicular to the rotation axis (X) of the coupling ring (31). The endless screw (33), connected to the motor (60), is also arranged with a rotation axis substantially perpendicular to the rotation axis (X) of the coupling ring (31). The gearwheel (34), which has external teeth for coupling with the endless screw (33), is arranged concentric to the rotation axis (X) and is integral with the coupling ring (31) in rotation. The gearwheel (34) also has a central through seat, configured to allow the passage of the tool-bearing shaft (S).

The portable boring machine according to the present invention provides important advantages.

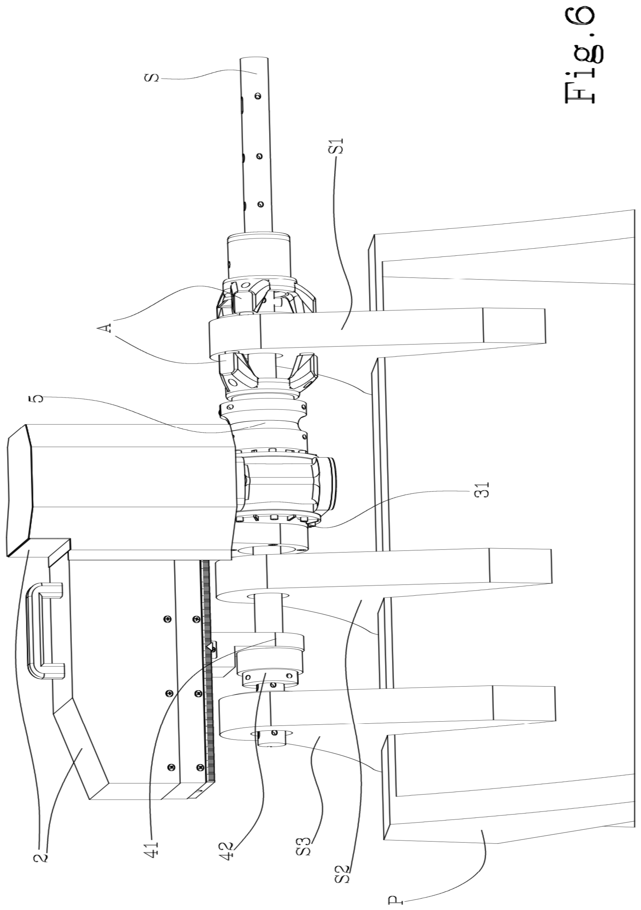

As already pointed out, thanks to the fact that the carriage (41) and the coupling ring (31) project outside the machine body (2) transversely to the rotation axis (X), it is possible to install the portable boring machine on a radial plane and along a radial direction relative to the rotation axis (X). This allows the machine body (2) to be installed alongside the part to be machined, substantially parallel to the rotation axis (X) of the tool-bearing shaft (S), drastically reducing the installation space along the rotation axis (X). This advantage is particularly relevant in cases where the spaces available for installation are extremely small, as in the case shown in figure 6.

In addition, the tool-bearing shaft (S) requires a much shorter length than known portable boring machines, as it remains outside and next to the machine body (2). In the current boring machines, on the other hand, the length of the tool-bearing shaft, in addition to the section necessary for the machining stroke, must be increased by a section equal to the length of the machine body along the rotation axis (X).

The portable boring machine according to the present invention is provided with a control system, adapted to regulate the actuation of the rotation assembly and of the advancement assembly. In particular, the control system is connected to the first motor (43) and to the second motor (60), to regulate the torque and/or rotation speed of the coupling ring (31), and to regulate the speed of translation and stroke of the carriage (41). The control system is provided with a user interface, to enable the desired setting of the operating parameters of the first motor (43) and of the second motor (60), depending on the specific working conditions. For example, the control system is configured to allow the setting of the stroke length of the carriage (41), which substantially depends on the conformation of the part to be machined, as well as the advancement speed of the carriage (41) and the rotation speed of the coupling ring (31), which mainly depend on the material of the part to be machined and the type of tool associated with the tool-bearing shaft (S).

The control system comprises a processor, provided with an algorithm designed to detect and process the instructions given by the user through the user interface, and to transmit signals corresponding to the received instructions to the rotation assembly and the advancement assembly, and in particular to the first motor (43) and the second motor (60), in order to perform the operations envisaged according to the parameters set by the user.

## Claims

1. A portable boring machine, comprising:
a machine body (2);
a rotation assembly, provided with a coupling ring (31) rotating about a rotation axis (X), which is configured to allow an integral coupling with a tool-bearing shaft (S) in rotation about the rotation axis (X);
an advancement assembly, provided with a carriage (41) movable parallel to the rotation axis (X), which comprises a fixing means (42) for fixing to the tool-bearing shaft (S), structured so as to enable the rotation of the shaft (S) about the rotation axis (X) and to be constrained to the shaft (S) relative to the translation along the rotation axis (X);
an attachment or insertion device (5), configured to allow the machine body (2) to be attached to an operating support (A), integral with the part to be machined;
**characterised in that**:
the carriage (41) and the coupling ring (31) project outside the machine body (2) transversely to the rotation axis (X);
the attachment or insertion device (5) comprises a fixed body (51), integral with the machine body (2), and a clamping body (52), removable from the fixed body (51) and clampable to the latter in order to solidly constrain the support (A) and allow the attachment of the machine body (2) to said operating support (A) by means of an insertion movement directed radially relative to the rotation axis (X).

2. The boring machine according to claim 1, wherein the advancement assembly comprises:
a first motor (43);
a transmission system (44,45), structured so as to transmit a rotation produced by the first motor (43) to the carriage (41).

3. The boring machine according to claim 2, wherein the transmission system (44,45) comprises a nut (44), integral with the carriage (41), and a drive screw (45), kinematically connected to the motor (43).

4. The boring machine according to claim 1, wherein the advancement assembly comprises a motor, connected to the carriage (41).

5. The boring machine according to one of the preceding claims, wherein the rotation assembly comprises:
a second motor (60);
a transmission system (33,34), structured so as to transmit a rotation produced by the second motor (60) to the coupling ring (31).

6. The boring machine according to claim 5, wherein the transmission system (33,34) comprises an endless screw (33), connected to the second motor (60), and a gearwheel (34), integral with the coupling ring (41) in rotation and meshed with the endless screw (33).

7. The portable boring machine according to claim 1, wherein:
the fixed body (51) comprises a shaped seat, intended to receive a portion of an operating support (A);
the clamping body (52) comprises a shaped seat, complementary to the shaped seat of the fixed body (51) and intended to receive a portion of said operating support (A);
the clamping body (52) is adapted to be clamped to the fixed body (51), in order to enable the clamping of said portion of an operating support (A) between the two shaped seats.

8. The boring machine according to claim 7, wherein said shaped seat of the fixed body (51) and said shaped seat of the clamping body (52) are semicylindrical.

9. The boring machine according to one of the preceding claims, comprising a control system, adapted to regulate the actuation of the rotation assembly and of the advancement assembly.

10. The boring machine according to claims 2 and 5, comprising a control system connected to the first motor (43) and to the second motor (60), to regulate the torque and/or rotation speed of the coupling ring (31), and to regulate the speed of translation and stroke of the carriage (41).
